Europäisches Patentamt

European Patent Office

Office européen des brevets

(11) Publication number: **0 137 237**
**A1**

## (12) EUROPEAN PATENT APPLICATION

(21) Application number: **84109838.7**

(22) Date of filing: **17.08.84**

(51) Int. Cl.⁴: **G 11 B 7/12**

(30) Priority: **17.08.83 JP 149962/83**

(43) Date of publication of application:
**17.04.85 Bulletin 85/16**

(84) Designated Contracting States:
**DE FR GB IT NL**

(71) Applicant: **KABUSHIKI KAISHA SANKYO SEIKI
SEISAKUSHO
5329, Shimosuwa-machi
Suwa-gun Nagano-ken(JP)**

(72) Inventor: **Kasuga, Ikuo
No. 1060-13, Inatomi
Tatsuno-machi Ina-gun Nagano(JP)**

(74) Representative: **Patentanwälte Henkel, Pfenning, Feiler,
Hänzel & Meinig
Möhlstrasse 37
D-8000 München 80(DE)**

(54) Pickup for optical information recording/reproducing apparatus.

(57) A pickup for an optical recording/reproducing apparatus having at least a light-emitting element (10), a beam splitter (30), and a condensing lens system (60) provided along an optical axis and a light-detecting element (80) disposed in opposition to the beam splitter (30). The pickup further includes, a combination of a frame (100) and a holder (90) mounted on the frame (100). The beam splitter (30) is located between the light-emitting element (10) and the condensing lens system (60). A first fixing structure is provided for holding and adjusting the position of the light detecting element (80) in a plane perpendicular to the optical axis, while a second fixing structure is provided for displaceably mounting the holder (90) so that the holder (90) is displaceable relative to the frame (100) in the direction (1120) of the optical axis.

FIG. 4

FIG. 5

# PICKUP FOR OPTICAL INFORMATION
# RECORDING/REPRODUCING APPARATUS

## BACKGROUND OF THE INVENTION

The present invention relates to a pickup for an optical information recording/reproducing apparatus.

In a pickup for an optical recording/reproducing apparatus in which at least a light-emitting element, a beam splitter, and a condensing lens system are provided on an optical axis and a light-detecting element is disposed in opposition to the beam splitter, it is necessary to provide a mechanism for adjusting the optical system, the light-emitting element, the light-detecting element, and the like to cause a focal point on an optical disk to be in phase with a focal point error signal for accurately detecting the focal point of light reflected from an optical disk.

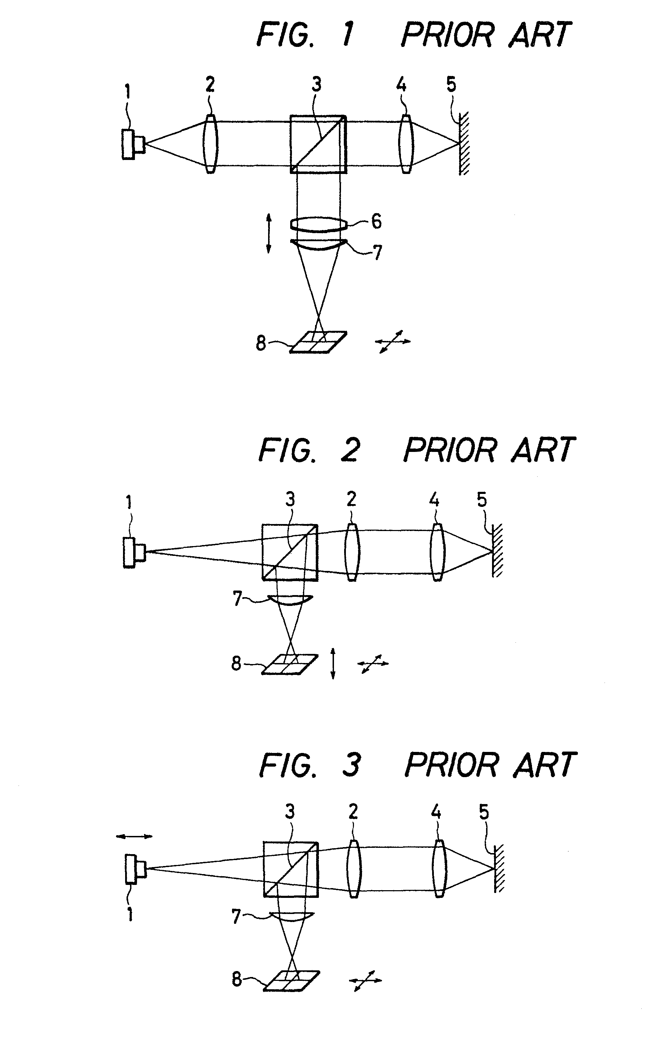

Prior art examples of such an adjustment mechanism will be described. In Fig. 1, reference numeral 1 designates a light-emitting diode used as a light-emitting element, 2 a collimating lens, 3 a beam splitter, 4 an objective lens, 5 an optical disk, 6 a condenser lens for the detecting operation, 7 a cylindrical lens, and 8 a light-detecting element. In this example, as shown by an arrow, the above-mentioned adjustment is performed by adjusting the position of the condenser lens 6. It is also necessary to adjust the position of the light-detecting element 8 by two-dimensionally moving the same in the directions indicated by arrows to thereby make the center of the surface of the light-detecting element 8 coincide with the center of the optical axis.

In the example shown in Fig. 2, the example of Fig. 1 is modified such that the condenser lens 6 is omitted. Accordingly, it is impossible to perform adjustment by moving such a condenser lens, and therefore the light-detecting element 8 is positionally adjusted in three axial directions, that is, the element 8 is vertically moved in addition to the movement in the other two directions as in the previous example.

In the example shown in Fig. 3, which is a modification of the example of Fig. 2, the light-emitting diode 1 is moved forward and backward along the optical axis to thereby perform focus adjustment.

These conventional techniques have disadvantages as follows:

For example, in the prior art example of Fig. 1, it is required to provide the condenser lens 6, and hence the apparatus is expensive. In the prior art example of

- 3 -

Fig. 2, it is necessary to adjust the position of the light-detecting element 8 in the three axial directions, and thus the arrangement is complicated, the adjustment is complex, and the apparatus can easily get out of adjustment due to vibration or the like. In the prior art example of Fig. 3, the forward/backward movement of the light-emitting diode 1 may affect the incident light so as to adversely affect the optical characteristics of the pickup.

SUMMARY OF THE INVENTION

The present invention has been attained in view of the above-mentioned drawbacks of the conventional techniques, and an object of the present invention is to provide a pickup for an optical information recording/reproducing apparatus in which the parts are reduced in number, the overall arrangement is simplified, and adjustment can easily be made to cause the focal point on an optical disk to be in phase with a focal point error signal.

To achieve the above-mentioned object, the pickup for an optical information recording/reproducing apparatus according to the present invention is arranged such that a beam splitter and a light-detecting element are formed into an adjustable integrated block and the

- 4 -

light-detecting element can be adjusted in the block in two directions and the block then moved forward/backward in the direction of the optical axis to thereby adjust the focal point.

## BRIEF DESCRIPTION OF THE DRAWINGS

Figs. 1 to 3 are diagrams showing respective conventional optical pickups;

Fig. 4 is a diagram showing the arrangement of the optical pickup according to the present invention;

Fig. 5 is an exploded perspective view of the optical pickup according to the present invention; and

Fig. 6 is a front view of the optical pickup according to the present invention.

## DESCRIPTION OF THE PREFERRED EMBODIMENTS

A preferred embodiment of the present invention will now be described hereunder.

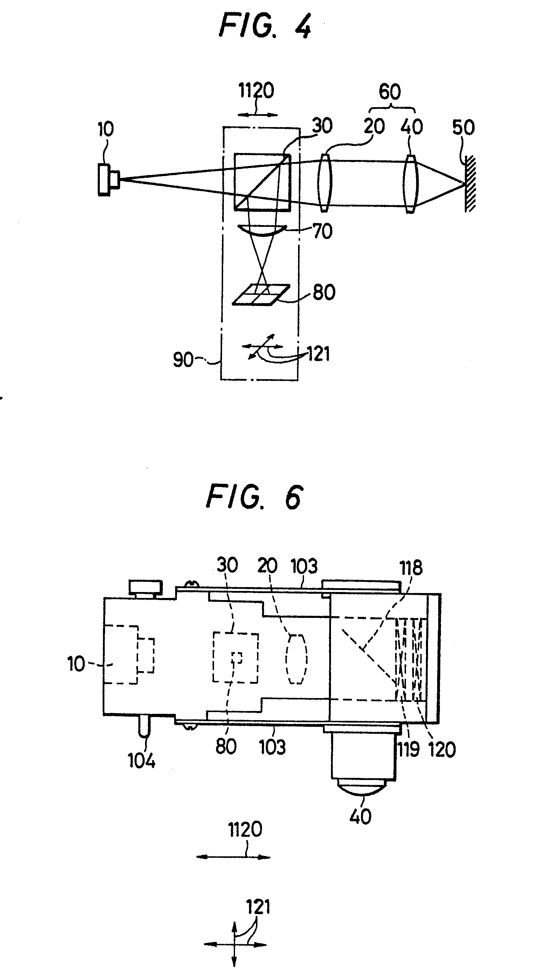

Fig. 4 shows the general arrangement of a pickup constructed according to the present invention, which arrangement includes a combination of a frame and a holder.

In Fig. 4, a light-emitting diode 10 used as a light source, a collimating lens 20, an objective lens 40, etc., are mounted on the frame (not shown). The collimating lens 20 and the objective lens 40 can be constituted by a single lens which performs the functions of both of the lenses 20 and 40, and therefore the collimating lens 20 and the objective lens 40 are generally referred to as a condensing lens system, represented herein by reference numeral 60.

A beam splitter 30, a cylindrical lens 70, a light-detecting element 80, etc., are mounted on the holder 90. The light-detecting element 80 is attached to the holder 90 by means of a first fixing structure, as will be described in more detail below, such that it can be positionally adjusted in two directions in a plane perpendicular to the optical axis as shown by an arrow in Fig. 4. The beam splitter 30 is attached to the holder 90 by means of a second fixing structure, also described below, so that the beam splitter 30 can be moved relative to the frame forward and backward in the optical axial direction.

Although the servo focusing accuracy can be improved with the provision of the cylindrical lens 70, in some cases, such a cylindrical lens is not always necessary.

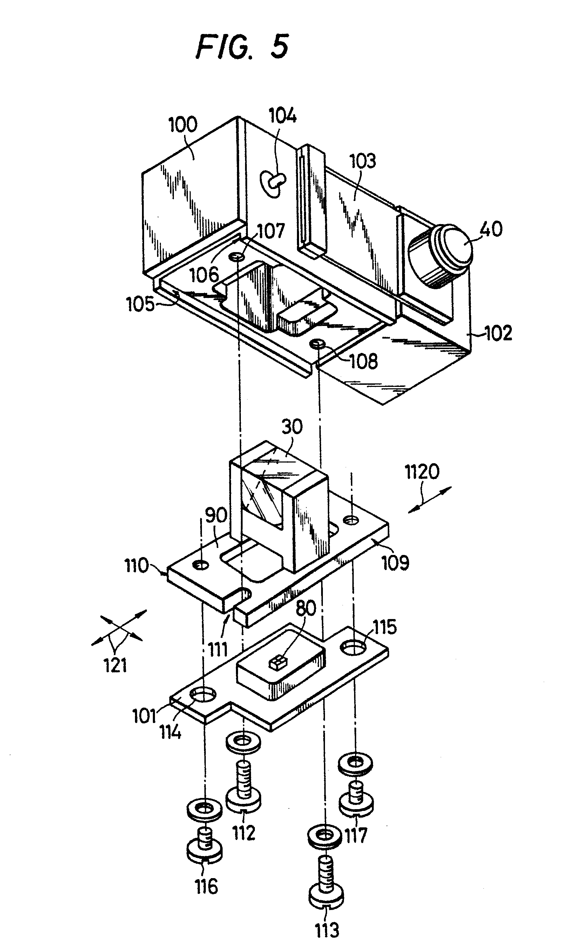

Fig. 5 shows a specific embodiment of the pickup according to the present invention. In Fig. 5, reference numeral 100 designates the frame on which a holder 90 is

- 6 -

attached. A substrate 101 is attached to the holder 90. A beam splitter 30 is fixedly attached to the holder 90 and a light-detecting element 80 is fixed to the substrate 101.

The frame 100 will be described. Reference numeral 102 designates a head on which an objective lens 40 is mounted. The head 102 is attached to the frame body through a plate spring 103 used for focus control. Reference numeral 104 designates a shaft for rotating the frame 100 in the tracking direction. The frame 100 is adapted to be rotatable about this shaft 104 for tracking control.

A groove-like portion is formed in the frame 100 and the respective opposing walls of the groove-like portion constitute guide walls 105 and 106 for guiding the holder 90. A pair of screw holes 107 and 108 is formed in the bottom portion of the groove-like portion and constitute, together with the guide walls 105 and 106, a part of a second fixing structure for causing the holder 90 to move for adjustment in the optical axial direction relative to the frame 100.

The holder 90 has smooth slidable end surface 109 and 110 formed at the opposite sides thereof so that the holder 90 engages with the groove-like portion and the end surfaces 109 and 110 are made to contact the guide walls 105 and 106. A pair of elongated holes 111 is formed at the longitudinally opposite end portions of the holder 90 so that the holder 90 can be attached to the frame 100 by means of attaching screws 112 and 113, which are screwed into the screw holes 107 and 108, respectively, passing through the elongated holes 111. Thus, the beam splitter 30 is located between the light-emitting diode 10 and the collimating lens 20. Upon loosening the attaching screws 112 and 113, the beam splitter 30 can be moved integrally with the holder 90 forward/backward along the optical axis. The arrow 1120 shows the direction of this adjustment movement.

In view of the above-mentioned functions, it can be considered that the slidable end surfaces 109 and 110, the elongated holes 111, the attaching screws 112 and 113, etc., constitute the second fixing structure.

The substrate 101 is attached to the holder 90 by means of attaching screws 116 and 117 which are screwed into the holder 90, passing through a pair of attaching holes 114 and 115, respectively. Each of the attaching holes 114 and 115 is formed so as to have a sufficiently large diameter relative to the diameter of each of the attaching screws 116 and 117 so that, if the attaching screws 116 and 117 are loosened, the light-detecting element 80 integrally provided with the substrate 101 can be desiredly moved two-dimensionally so as to be adjustable in a plane perpendicular to the optical axis. Reference numeral 121 designates the direction of this adjustment. Thus, the attaching holes 114 and 115, the attaching screws 116 and 117, the screw holes formed in the holder 90, etc., constitute a first fixing structure for holding and positionally adjusting the light-detecting element on the optical axis.

Fig. 6 shows the arrangement of other parts employed in Fig. 5.

In the drawing, reference numeral 118 designates a mirror, 119 a stationary side focus controlling electromagnetic coil, and 120 a movable side focus controlling magnet. The steps for adjusting the focal point according to this embodiment are as follows:

In the state where the holder 90 has been attached to the frame 100, the substrate 101 is two-dimensionally adjusted by the first fixing structure such that the beam is at the center of the light-detecting element 80. Then, the substrate 101 is fixed to the holder 90. Next, using the second fixing structure, the holder 90 is moved and adjusted in the direction of the arrow 1120 and fastened and fixed at the position where the beam is focused on the light-detecting element 80.

As described above, according to the present invention, in connection with the prior art of Fig. 1, no element corresponding to the condenser lens 6 is required, making it possible to provide an inexpensive apparatus. With respect to the prior art of Fig. 2, according to the present invention, the position adjusting section related to the first fixing structure and the position adjusting section related to the second fixing structure are separately provided so as to be individually adjusted so that the adjustment operation is simplified and less warp occurs. Concerning the prior art of Fig. 3, according to the present invention, such a method of performing adjustment by moving a light-emitting element is not employed so that the incident light is not affected and stable optical characteristics can be obtained.

Thus, according to the present invention, a pickup is provided in which all the drawbacks of the prior art are eliminated.

## CLAIMS

1. In a pickup for an optical recording/reproducing apparatus in which at least a light-emitting element, a beam splitter, and a condensing lens system are provided on an optical axis and a light-detecting element is disposed in opposition to said beam splitter, the improvement wherein said pickup comprises a combination of a frame and a holder mounted on said frame, said beam splitter being located between said light-emitting element and said condensing lens system, and further comprising first fixing means for holding and adjusting the position of said light-detecting element on said optical axis, and second fixing means for displaceably mounting said holder so as to be displaceable relative to said frame in the direction of said optical axis.

2. The pickup for an optical recording/reproducing apparatus according to claim 1, wherein said first fixing means comprises attaching screws threadedly engaged with screw holes formed in said holder and passing through holes formed in a substrate supporting said light-detecting element.

3. The pickup for an optical recording/reproducing apparatus according to claim 1, wherein said second fixing means comprises attaching screws passing through elongated holes formed in said holder and threadedly engaged with screw holes formed in said frame.

4. The pickup for an optical recording/reproducing apparatus according to claim 3, wherein said second fixing means comprises guide walls formed in said frame, slidable end surfaces of said holder being guided by and sliding along said guide walls for adjustment.

0187287

## FIG. 1   PRIOR ART

## FIG. 2   PRIOR ART

## FIG. 3   PRIOR ART

0187287

## FIG. 4

## FIG. 6

## FIG. 5

0137237

European Patent
Office

**EUROPEAN SEARCH REPORT**

Application number

EP 84 10 9838

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| A | GB-A-2 064 848 (NIPPON TELEGRAPH & TELEPHONE PUBLIC CORP.) * Page 2, lines 18-75; figures 3, 14 * | 1 | G 11 B 7/12 |
| A | EP-A-0 775 81 (PHILIPS) * Page 3, line 20 - page 5, line 22; figures 1, 3 * | 1 | |
| A | FR-A-2 508 752 (THOMSON-CSF) | | |
| A | GB-A-2 082 344 (UNIVERSAL PIONEEER CORP.) | | |
| P,A | PATENT ABSTRACTS OF JAPAN vol. 8, no. 42, 23rd February 1984, page (P-256) (1479); & JP-A-58-194151 (SONY) 12-11-83 | | TECHNICAL FIELDS SEARCHED (Int. Cl 4) G 11 B 7/00 |

The present search report has been drawn up for all claims

| Place of search BERLIN | Date of completion of the search 09-11-1984 | Examiner ROGNONI M.G.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82